# EUROPÄISCHE PATENTANMELDUNG

(11) **EP 1 955 800 A2**
(43) Veröffentlichungstag der Anmeldung: **13.08.2008**
(21) Anmeldenummer: 08000530.9
(22) Anmeldetag: 12.01.2008
(51) Int. Cl.: B23D 45/04, B23D 47/02

(54) **Gehrungssäge**

(30) Priorität: 06.02.2007 DE 202007001946 U
(71) Anmelder: Metabowerke GmbH, 72622 Nürtingen (DE)
(72) Erfinder: Engelmann, Marcus, 49716 Meppen (DE); Vorwerk, Uwe, 49770 Herzlake (DE); Bergmann, Laurenz, 49733 Haren/Ems (DE)
(74) Vertreter: Gesthuysen, von Rohr & Eggert

(57) **Zusammenfassung**

Gegenstand der Erfindung ist eine Gehrungssäge mit einer eine Werkstückauflagefläche (1) bildenden Basis (2), einem mit der Basis (2) schwenkbar verbundenen Sägeaggregat (10) und einer Winkelfixierungseinrichtung, die zwischen der Basis (2) und dem Sägeaggregat (10) vorgesehen ist und mit der der Schwenkwinkel des Sägeaggregates (10) gegenüber der Basis (2) (der Gehrungswinkel) einstellbar und fixierbar ist. Diese ist dadurch gekennzeichnet, daß die Winkelfixierungseinrichtung als ein zwischen der Basis (2) und dem Sägeaggregat (10) wirksames selbsthemmendes Getriebe (11) ausgeführt ist, das ein mittels eines Betätigungselementes (12) betätigbares Antriebs-Getriebeteil (13) und ein vom Antriebs-Getriebeteil (13) angetriebenes Abtriebs-Getriebeteil (14) aufweist, die im Normalzustand, also ohne besondere Handhabungsmaßnahmen, in Eingriff miteinander stehen, so daß die Fixierung des Schwenkwinkels nur durch die Selbsthemmung dieses Getriebes (11) erfolgt.

## Beschreibung

Die Erfindung betrifft eine Gehrungssäge mit den Merkmalen des Oberbegriffs von Anspruch 1.

Gehrungssägen werden genutzt, um Werkstücke aus Holz, Metall oder anderen Materialien unter bestimmten Winkeln zu sägen. Gehrungssägen der in Rede stehenden Art gibt es in vielen verschiedenen Ausführungsformen, die alle für die vorliegende Erfindung in Frage kommen.

Eine erste Ausführungsform ist eine Tischkreissäge mit Zugfunktion, eine halbstationäre Säge, die ein Sägen eines Werkstückes auf einer oberseitigen Werkstückauflagefläche erlaubt. Bei dieser Säge befindet sich an der die Werkstückauflagefläche bildenden Basis ein drehbar gelagerter Drehteller (EP-A-0 988 126). Die Lagerung ist meist unterhalb der Werkstückauflagefläche der Basis zu finden. Am Drehteller unterhalb des entsprechenden Teils der Werkstückauflagefläche befindet sich eine Sägeeinrichtung mit einem Kreissägeblatt, das die Werkstückauflagefläche des Drehtellers in einem Sägeschlitz von unten her nach oben überstehend durchsetzt. Die Sägeeinrichtung läßt sich in Richtung des Sägeschlitzes über eine bestimmte Strecke nach vom ziehen (Zugfunktion). Steht das Kreissägeblatt nicht gerade, sondern nach Drehung des Drehtellers an der Grundplatte in einem Winkel zur Werkstückauflagefläche der Grundplatte, so kann man unter Nutzung der Zugfunktion einen Gehrungsschnitt in einem auf der Werkstückauflagefläche liegenden Werkstück ausführen.

An einer Tischkreissäge mit oder ohne Zugfunktion gibt es eine weitere kraftschlüssige Winkelfixierung, und zwar für die Neigungsverstellung der Sägeeinrichtung relativ zur Werkstückauflagefläche. Auch insoweit erfolgt eine Einstellung eines Gehrungswinkels bzgl. des Werkstückes.

Eine typische Gehrungssäge ist jedoch häufig keine Tischkreissäge, sondern eine Kappsäge, bei der sich die Sägeeinrichtung oberhalb der Werkstückauflagefläche an einer horizontal verlaufenden Schwenkachse schwenkbar angeordnet befindet (DE-A-103 41 192). Durch Herunterschwenken der Sägeeinrichtung mit dem Kreissägeblatt gegen die Werkstückauflagefläche läßt sich ein Kappsägeschnitt in einem auf der Werkstückauflagefläche liegenden Werkstück ausführen. Befindet sich bei diesem Kappsägeschnitt der Drehteller an der Grundplatte mit der daran befindlichen Sägeeinrichtung in einem Winkel zur Grundplatte, so entsteht der entsprechende Gehrungswinkel am Werkstück.

Eine Kapp- und Gehrungssäge wird zur Doppel-Gehrungssäge, wenn nicht nur ein Drehteller an der Grundplatte um eine entsprechende Hochachse drehbar gelagert ist, sondern die Sägeeinrichtung ihrerseits am Drehteller auch noch um eine parallel zu der oder in der Ebene des Drehtellers verlaufende Schwenkachse seitlich schwenkbar ist. Dadurch wird die seitliche Neigung der Sägeeinrichtung verändert. Man kann so Doppel-Gehrungsschnitte an Werkstücken ausführen (DE-A-103 41 192).

Bekannt sind auch kombinierte Kapp-, Gehrungs- und Tischkreissägen mit einer wendbar gelagerten Grundplatte mit eingelassenem Drehteller (DE-A-38 07 158). Diese sind in einer Stellung der Grundplatte als Tischkreissäge nutzbar, in der anderen Stellung der Grundplatte haben sie die Funktion einer Kapp- und Gehrungssäge.

Gehrungssägen im Sinne der vorliegenden Erfindung sind aber nicht nur Sägen mit einem Sägeblatt, sondern auch Bandsägen. Bei diesen befindet sich am Gestell der Säge ein um eine horizontal verlaufende Achse schwenkbarer Werkstücktisch, der in der Terminologie der vorliegenden Erfindung die eine Werkstückauflagefläche bildende Basis darstellt. Auch hier erfolgt durch Schwenkung der Werkstückauflagefläche relativ zur Sägeeinrichtung, hier dem Sägeband der Bandsäge, eine Veränderung der Neigung des Werkstückes und damit die Möglichkeit, im Werkstück einen Gehrungsschnitt auszuführen (DE-A-33 25 211).

Eine weitere Gehrungssäge ist als Handwerkzeug bekannt, nämlich eine Handkreissäge. Bei dieser ist die Werkstückauflagefläche an der Unterseite der Basis gebildet, an deren Oberseite sich das Sägeaggregat befindet. Das Sägeaggregat selbst hat einen Handgriff und einen Motor und die Basis ist eine Art Rahmen, der die Relativlage des Sägeaggregates zur Oberseite des zu sägenden Werkstükkes definiert. Auch dort stellt sich das Problem der Fixierung des Winkels mittels einer Winkelfixierungseinrichtung, um auch Gehrungsschnitte im Werkstück ausführen zu können (DE-U-202 12 403).

Ausgangspunkt für die Formulierung der Lehre der vorliegenden Erfindung ist eine Kapp- und Gehrungssäge, die eine klassische Schnellverstellung mit einer jeweils zugeordneten kraftschlüssigen Winkelfixierungseinrichtung sowohl für die Drehung des Drehtellers an der Grundplatte als auch für die Neigungsverstellung der Kapp-Sägeeinrichtung gegenüber dem Drehteller mit einer Präzisions-Feineinstellung des jeweils eingestellten Schwenkwinkels und mit einer diesbezüglichen Digitalanzeige verbindet (DE 10 2005 031 064 A1).

Das besonders instruktive Ausführungsbeispiel von Fig. 37 und 38 der DE 10 2005 031 064 A1 ist beschrieben in den Abschnitten [0151] / [0152]. An der am Drehteller rückwärtig angeordneten Kapp-Sägeeinrichtung befindet sich hier ein kreisbogenförmiger Rand. Am Rand ist ein kreisbogenförmiger Schneckenrad-Zahnkranz angeordnet, der ein Abtriebs-Getriebeteil eines Schneckenradgetriebes bildet. Das Antriebs-Getriebeteil des Schneckenradgetriebes ist gebildet von einer Antriebsschnecke, die auf einer Antriebswelle gelagert ist. Die Antriebswelle ist am Drehteller dieser Kapp- und Gehrungssäge unterhalb des kreisbogenförmigen Randes der Sägeeinrichtung schwenkbar gelagert. Am von der Schwenklagerung fernen Ende der Antriebswelle befindet sich ein als Drehknauf ausgeführtes Betätigungselement. Am Drehteller befindet sich ferner ein Anschlag, an dem die Antriebswelle normalerweise, also ohne besondere Handhabungsmaßnahmen anliegt. Dann ist die Antriebsschnecke außer Eingriff mit dem Schneckenrad-Zahnkranz.

Die Winkelfixierung erfolgt mittels einer typischen kraftschlüssigen Klemmeinrichtung. Zur schnellen Grobeinstellung des Neigungswinkels der Sägeeinrichtung relativ zum Drehteller wird die Klemmeinrichtung gelöst und die Sägeeinrichtung wird um die parallel zu der oder in der Ebene des Drehtellers verlaufende Schwenkachse geschwenkt (geneigt). Dabei wird die Sägeeinrichtung von Hand festgehalten. Zur dann folgenden Feineinstellung des Neigungswinkels wird das Antriebs-Getriebeteil an das Abtriebs-Getriebeteil der Feineinstellung herangeschwenkt, so daß die Getriebeteile miteinander in Eingriff kommen. Da das Schneckenradgetriebe auf Selbsthemmung ausgelegt ist (siehe auch Abschnitt [0150]), ist es während dieser Feineinstellung nicht erforderlich, die Sägeeinrichtung durch die Hand einer Bedienungsperson in ihrer Position zu halten. Vielmehr kann die Bedienungsperson nach Erreichen des gewünschten, fein eingestellten Neigungswinkels der Sägeeinrichtung die Klemmeinrichtung mit der anderen Hand wieder festziehen, um den Neigungswinkel endgültig kraftschlüssig zu fixieren. Danach wird das Betätigungselement des Getriebes der Feineinstellung wieder losgelassen und die Antriebswelle samt Antriebsschnecke fällt unter ihrem eigenen Gewicht gegen den Anschlag zurück.

Bei dem zuvor erläuterten, den Ausgangspunkt für die Lehre der vorliegenden Erfindung bildenden Stand der Technik erfolgt die Winkelfixierung mittels einer klassischen, seit Jahrzehnten bekannten kraftschlüssigen Winkelfixierungseinrichtung.

Der Lehre liegt nun das Problem zugrunde, die Ausführung der Winkelfixierungseinrichtung bei einer Gehrungssäge der in Rede stehenden Art zu optimieren.

Das zuvor erläuterte Problem wird nach der Lehre der Erfindung bei einer Gehrungssäge mit den Merkmalen des Oberbegriffs von Anspruch 1 durch die Merkmale des kennzeichnenden Teils von Anspruch 1 gelöst.

Erfindungsgemäß wird die Winkelfixierungseinrichtung selbst als ein zwischen der Basis und dem Sägeaggregat wirksames selbsthemmendes Getriebe ausgeführt, das im Normalzustand, also ohne besondere Handhabungsmaßnahmen in Eingriff steht. Das bei dem zuvor erläuterten Stand der Technik vorhandene selbsthemmende Getriebe, das dort lediglich der Feineinstellung nach Durchführung besonderer Handhabungsmaßnahmen dient, wird erfindungsgemäß also zusätzlich als formschlüssige Winkelfixierungseinrichtung genutzt. Dadurch kann die im Stand der Technik zusätzlich zum selbsthemmenden Getriebe erforderliche Winkelfixierungseinrichtung, die dort in klassischer Weise als kraftschlüssige Klemmeinrichtung ausgeführt ist, in Wegfall kommen.

Das erfindungsgemäße Konzept nutzt lediglich eine Umkehrung der Funktionsweise des selbsthemmenden Getriebes dergestalt, daß dieses im Normalzustand in Eingriff steht, wodurch eine zusätzliche Winkelfixierungseinrichtung in Wegfall kommen kann. Das ist eine verblüffende, erhebliche Vereinfachung der Konstruktion einer erfindungsgemäßen Gehrungssäge.

Bei Realisierung der Lehre der Erfindung muß man auf die an sich zweckmäßige Schnellverstellung des Schwenkwinkels nicht verzichten. Dem insoweit besonders zweckmäßigen Anspruch 4 kann man entnehmen, daß nach bevorzugter Lehre vorgesehen ist, daß das Antriebs-Getriebeteil des selbsthemmenden Getriebes durch eine manuelle Handhabung außer Eingriff mit dem Abtriebs-Getriebeteil bringbar ist (oder umgekehrt das Abtriebs-Getriebeteil außer Eingriff mit dem dann ortfesten Antriebs-Getriebeteil), so daß in dem dann durch manuelle Handhabung erreichten Zustand das Sägeaggregat wie bisher gegenüber der Basis frei (und schnell) verstellbar ist. Diese Handhabung wird bei gleichzeitigem Halten des Sägeaggregates bzw. der Sägeeinrichtung von Hand ausgeführt. Dann beendet man die manuelle Handhabung des selbsthemmenden Getriebes und dieses kehrt wieder in den Eingriffszustand zurück, der gleichzeitig die Winkelfixierung im erreichten Zustand zur Folge hat.

Nach weiter bevorzugter Lehre kommt dabei besondere Bedeutung einer Maßnahme zu, die für ein positives Ineingriffkommen der Getriebeteile des selbsthemmenden Getriebes sorgt, nämlich dergestalt, daß das Antriebs-Getriebeteil gegen das Abtriebs-Getriebeteil durch die Kraft einer Anstellfeder vorgespannt ist und so allein unter Federkraft wieder in Eingriff mit dem Abtriebs-Getriebeteil gelangen kann.

Bevorzugte Ausgestaltungen und Weiterbildungen der Lehre der Erfindung sind Gegenstand der Unteransprüche.

Die Erfindung und die mit den weiteren Ausgestaltungen verbundenen Vorteile und Besonderheiten werden in Verbindung mit der Erläuterung bevorzugter Ausführungsbeispiele der vorliegenden Erfindung anhand der Zeichnung näher erläutert. In der Zeichnung zeigt
- Fig. 1: in perspektivischer Ansicht ein Ausführungsbeispiel einer Kapp- und Gehrungssäge,
- Fig. 2: in schematischer Darstellung und in Draufsicht, vergrößert und ausschnittweise, den vorderen Bereich von Grundplatte und Drehteller der Kapp- und Gehrungssäge aus Fig. 1 mit der dort angeordneten Winkelfixierungseinrichtung gemäß der Erfindung,
- Fig. 3: ausschnittweise, in vergrößerter Darstellung, ein entsprechendes Beispiel einer Neigungswinkel-Fixierungseinrichtung gemäß der Erfindung.

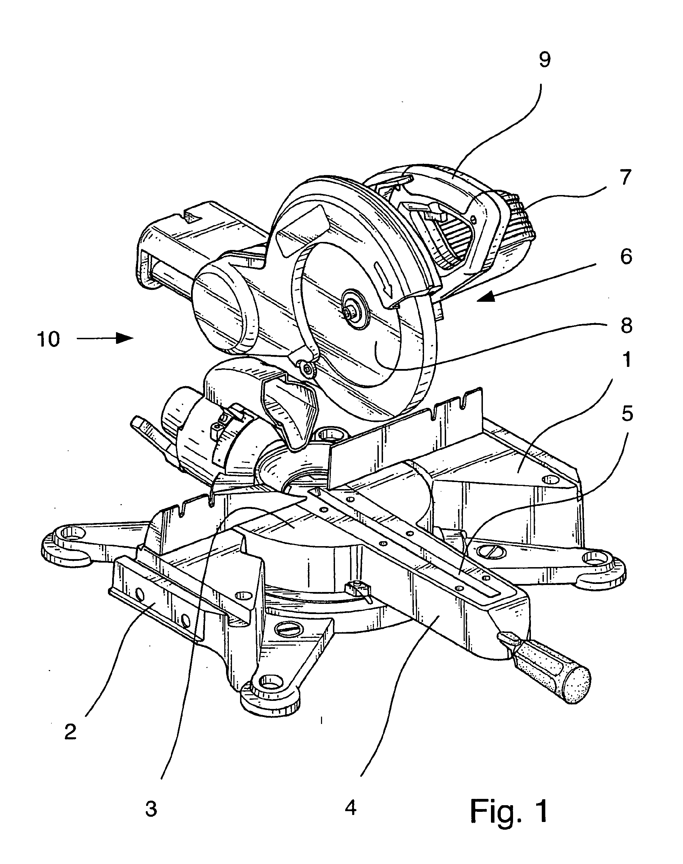

Die Erfindung wird nun anhand der in Fig. 1 dargestellten, ein bevorzugtes Ausführungsbeispiel bildenden Kapp- und Gehrungssäge erläutert. Die Ausführungen in der Beschreibungseinleitung machen jedoch deutlich, daß die Lehre der Erfindung grundsätzlich bei allen Sägen eingesetzt werden kann, bei denen Basis und Sägeaggregat (im weitesten Sinne) unterschiedliche Winkelstellungen zueinander einnehmen sollen, die jeweils zu fixieren sind.

Die in Fig. 1 beispielhaft dargestellte Gehrungssäge weist zunächst eine eine Werkstückauflagefläche 1 bildende Basis 2 auf. Im dargestellten Ausführungsbeispiel ist die Basis 2 als Träger mit einer mittigen Ausnehmung ausgeführt. In die mittige kreisförmige Ausnehmung ist ein Drehteller 3 eingesetzt. Der Drehteller 3 ist an der Basis 2 um seine Hochachse drehbar gelagert. Der Drehteller 3 weist einen Auslegerarm 4 mit einem Eintauchschlitz 5 auf. Am Drehteller 3 ist eine Kapp-Sägeeinrichtung 6 schwenkbar gelagert, wobei deren Schwenkung um eine in der Ebene des Drehtellers 3 verlaufende Schwenkachse erfolgt. Die Kapp-Sägeeinrichtung 6 weist einen Antriebsmotor 7, ein davon angetriebenes Kreissägeblatt 8 sowie einen Betätigungs-Handgriff 9 auf. Letzterer dient dazu, das Kreissägeblatt 8 samt Antriebsmotor 7 zur Ausführung eines Kappschnittes nach unten gegen die Werkstückauflagefläche 1 an Basis 2 und Drehteller 3 zu schwenken. Eine ausführliche Erläuterung einer solchen Kapp- und Gehrungssäge findet sich in der DE 10 2005 031 064 A1, auf die hier zur Vermeidung von Wiederholungen verwiesen werden darf.

Im dargestellten Ausführungsbeispiel bilden der Drehteller 3 und die daran befindliche Kapp-Sägeeinrichtung 6 gemeinsam das Sägeaggregat 10 relativ zur die Basis 2 bildenden feststehenden Grundplatte. Die Kapp-Sägeeinrichtung 6 als solche bildet das Sägeaggregat 10 relativ zum Drehteller 3, wenn man nur diesen Teil der Gehrungssäge betrachtet.

Zwischen der Basis 2 und dem Sägeaggregat 10 ist eine Winkelfixierungseinrichtung vorgesehen, mit der der Schwenkwinkel des Sägeaggregates 10 gegenüber der Basis 2 einstellbar und fixierbar ist. In Fig. 1 ist insoweit eine erste Winkelfixierungseinrichtung am Auslegerarm 4 angedeutet. Eine zweite Winkelfixierungseinrichtung findet sich rückseitig an der Kapp- und Gehrungssäge. Sie ist zwischen der Kapp-Sägeeinrichtung 6 einerseits und dem Drehteller 3 andererseits wirksam und führt zur kraftschlüssigen Fixierung der Kapp-Sägeeinrichtung 6 bei einer bestimmten Seitenneigung in Folge einer Schwenkung um eine in der Ebene des Drehtellers 3 verlaufende Schwenkachse.

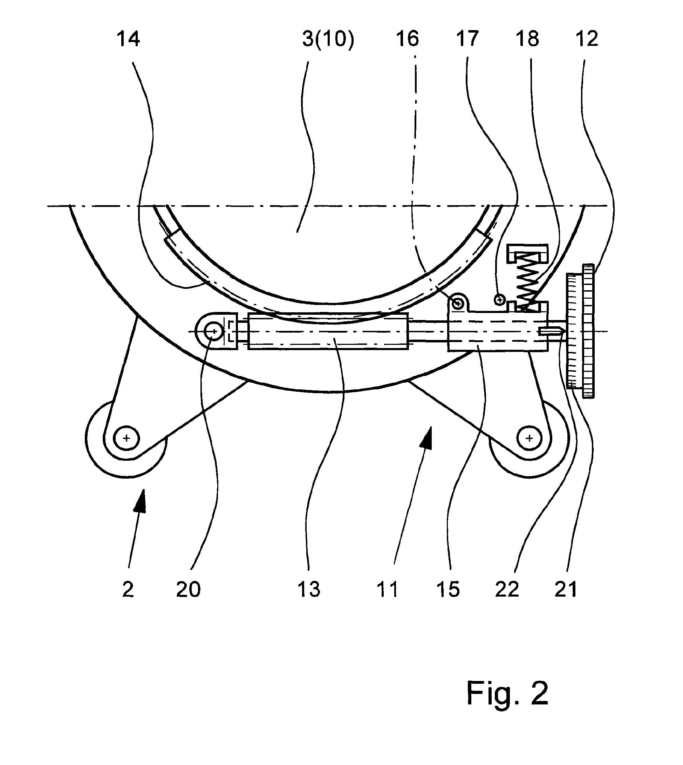

Anhand von Fig. 2 wird nun die erfindungsgemäße Ausgestaltung der Winkelfixierungseinrichtung, hier bezüglich einer die Basis 2 bildenden Grundplatte und dem Drehteller 3 mit samt der Kapp-Sägeeinrichtung 6, die gemeinsam insoweit das Sägeaggregat 10 bilden näher erläutert.

Das dargestellte Ausführungsbeispiel zeigt, daß die Winkelfixierungseinrichtung hier als ein zwischen der Basis 2 und dem Drehteller 3 (als Teil des Sägeaggregats 10) wirksames selbsthemmendes Getriebe 11 ausgeführt ist. Dieses Getriebe 11 weist ein mittels eines Betätigungselementes 12, hier in Form eines Drehknaufs ausgeführt, manuell betätigbares Antriebsgetriebeteil 13, hier in Form einer Antriebsschnecke eines Schneckenrad-Antriebs, auf. Vom Antriebs-Getriebeteil 13 wird ein Abtriebs-Getriebeteil 14 angetrieben, das hier im bevorzugten Ausführungsbeispiel als Schneckenrad-Zahnkranz des Schneckenradgetriebes ausgeführt ist.

Wesentlich ist, daß das Getriebe 11 selbsthemmend ausgeführt ist. Ein Schnekkenradgetriebe ist typischerweise als selbsthemmendes Getriebe auslegbar, indem die Gangsteigungen der Antriebsschnecke 13 und des Schneckenrad-Zahnkranzes 14 auf Selbsthemmung ausgelegt sind. Es gibt aber auch andere selbsthemmende Getriebe, beispielsweise bei Wahl entsprechender Gangsteigungen ein Gewindespindel/Spindelmutter-Getriebe. Auch entsprechend schräg verzahnte Zahnradgetriebe können selbsthemmend ausgelegt werden.

Für das dargestellte Ausführungsbeispiel ist wesentlich, daß die Getriebeteile 13, 14 im Normalzustand, also ohne besondere Handhabungsmaßnahmen, in Eingriff miteinander stehen, so daß die Fixierung des Schwenkwinkels nur durch die Selbsthemmung des Getriebes 11 gewährleistet ist. Das hat zur Folge, daß die zur Feineinstellung dienende getriebliche Einstellvorrichtung gleichzeitig die Winkelfixierungseinrichtung bildet, also eine im Stand der Technik erforderliche kraftschlüssige Klemmeinrichtung nicht mehr vorhanden sein muß. Eine erhebliche Vereinfachung der Konstruktion ist die Folge.

Das dargestellte und insoweit bevorzugte Ausführungsbeispiel sieht vor, daß das Antriebs-Getriebeteil 13 der Basis 2 und das Abtriebs-Getriebeteil 14 dem Sägeaggregat 10 bzw. hier dem Drehteller 3 zugeordnet ist.

Grundsätzlich ist auch eine genau umgekehrte Zuordnung der Getriebeteile 13, 14 zu den Teilen der Gehrungssäge möglich. Allerdings ist es zweckmäßig, das mit dem Betätigungselement 12 ausgerüstete Antriebs-Getriebeteil 13 ortsfest an der Gehrungssäge anzuordnen, so daß das Betätigungselement 12 sich immer an ein und derselben, für die Bedienungsperson gewohnten Stelle an der Gehrungssäge befindet. Das gilt sowohl für die Einstellung des Schwenkwinkels als Drehwinkel wie auch für die Einstellung des Schwenkwinkels als Neigungswinkel der Kapp-Sägeeinrichtung 6 gegenüber dem Drehteller 3.

Das in Fig. 2 dargestellte bevorzugte Ausführungsbeispiel zeigt eine weitere Besonderheit dergestalt, daß das Antriebs-Getriebeteil 13 durch eine manuelle Handhabung außer Eingriff mit dem Abtriebs-Getriebeteil 14 bringbar ist, wobei in dem dann erreichten Zustand das Sägeaggregat 10 gegenüber der Basis 2 frei verstellbar ist. Auch insoweit ist grundsätzlich eine umgekehrte Zuordnung denkbar, wenn auch möglicherweise nicht ganz so zweckmäßig.

Durch diese Maßnahme wird jedenfalls erreicht, daß man in klassischer Weise eine schnelle manuelle Verstellung des Sägeaggregates 10 gegenüber der Basis 2 über erhebliche Schwenkwinkel vornehmen kann, wenn man das Sägeaggregat 10 von Hand während der Verstellung festhält. Am Ende der Verstellbewegung bringt man das selbsthemmende Getriebe 11 wieder in Eingriff. Dadurch erreicht man die Winkelfixierung und schafft die Möglichkeit, durch Betätigung des Betätigungselementes 12 dann die gewünschte Feineinstellung auf den endgültig angestrebten Schwenkwinkel vorzunehmen, ohne dabei noch das Sägeaggregat 10 gegenüber der Basis 2 von Hand festhalten zu müssen.

Das dargestellte und bevorzugte Ausführungsbeispiel sieht ferner vor, daß das Antriebs-Getriebeteil 13, wenn es denn das verlagerbare Getriebeteil des Getriebes 11 ist, gemeinsam mit dem Betätigungselement 12 an einem Lagerelement 15 angeordnet ist, das seinerseits gegenüber der Basis 2 mittels einer Schwenkachse 16 schwenkbar gelagert ist. Die Schwenkbewegung ist hinsichtlich ihres Ausmaßes durch einen Anschlag 17 an der die Basis 2 bildenden Grundplatte bzw. dem Untertisch begrenzt. Durch Schwenkung des Lagerelements 15 wird das Antriebs-Getriebeteil 13 außer Eingriff mit dem Abtriebs-Getriebeteil 14 gebracht.

Bei entsprechend anderer Zuordnung der Getriebeteile gilt natürlich die entsprechend andere Bezugnahme der Relativbewegungen.

Besonders zweckmäßig ist die gesamte Anordnung hier nun auch noch dadurch, daß das Antriebs-Getriebeteil 13 gegen das Abtriebs-Getriebeteil 14 durch die Kraft einer Anstellfeder 18 vorgespannt ist und so allein unter Federkraft wieder in Eingriff mit dem Abtriebs-Getriebeteil 14 gelangen kann. Die Anstellfeder 18 ist hier als Schraubendruckfeder dargestellt und eingezeichnet worden. Selbstverständlich kann man sich hier alle Arten von Anstellfedern 18 vorstellen. Auch eine in sich elastisch verformbare Anordnung des Antriebs-Getriebeteils 13 ist insoweit denkbar.

Die Anstellung unter der Kraft einer Anstellfeder 18 hat den Vorteil, daß man nach Loslassen des Betätigungselementes 12 des Getriebes 11 das Sägeaggregat 10 bzw. den Drehteller 3 des Sägeaggregates 10 gegenüber der Basis 2 nur ein wenig schwenken muß, bis die Getriebeteile 13, 14 von selbst wieder miteinander in Eingriff geraten.

Damit die Getriebeteile 13, 14 unter den auftretenden Kräften nicht auseinander gedrückt werden, empfiehlt sich eine mechanische Verriegelung des Antriebs-Getriebeteils 13 mittels eines Riegelelements 20, das in Fig. 2 links angedeutet ist.

Bei dem in Fig. 2 dargestellten bevorzugten Ausführungsbeispiel der Erfindung sieht man, daß, wie bereits oben angesprochen, das Abtriebs-Getriebeteil 14 als kreisbogenförmiger Schneckenrad-Zahnkranz und das Antriebs-Getriebeteil 13 als Antriebsschnecke ausgeführt ist, deren Gangsteigungen auf Selbsthemmung ausgelegt sind. Der kreisbogenförmige Schneckenrad-Zahnkranz muß sich natürlich nur über den dem maximalen Schwenkwinkel entsprechenden Bereich am Drehteller 3 hinweg erstrecken.

Im übrigen zeigt das in Fig. 2 dargestellte Ausführungsbeispiel die Variante, bei der vorgesehen ist, daß die Basis 2 eine Grundplatte ist, daß das Sägeaggregat 10 einen an der Grundplatte drehbar gelagerten Drehteller 3 und eine am Drehteller 3 gelagerte Kapp-Sägeeinrichtung 6 oder Tisch-Zug-Sägeeinrichtung aufweist, daß die Schwenkbewegung um die Hochachse des Drehtellers 3 erfolgt, daß das Abtriebs-Getriebeteil 14 am Rand des Drehtellers 3 angeordnet ist und daß das Antriebs-Getriebeteil 13 mit dem Betätigungselement 12 so an der Grundplatte angeordnet ist, daß das Betätigungselement 12 von vorne, insbesondere für eine rechtshändige Bedienungsperson, gut zugänglich ist.

Fig. 2 zeigt im übrigen noch eine weitere Besonderheit, die im Grundsatz bereits aus dem den Ausgangspunkt bildenden Stand der Technik bekannt ist, nämlich eine Skala für die Feineinstellung. Hier ist eine mechanische Skalierung gewählt worden mit einer Strichskala 21 am als Drehknauf ausgeführten Betätigungselement 12 und einem Zeiger 22 am Lagerelement 15. Entsprechend dem Offenbarungsgehalt der DE 10 2005 031 064 A1 kann auch eine elektronische Anzeigeeinrichtung eingesetzt werden.

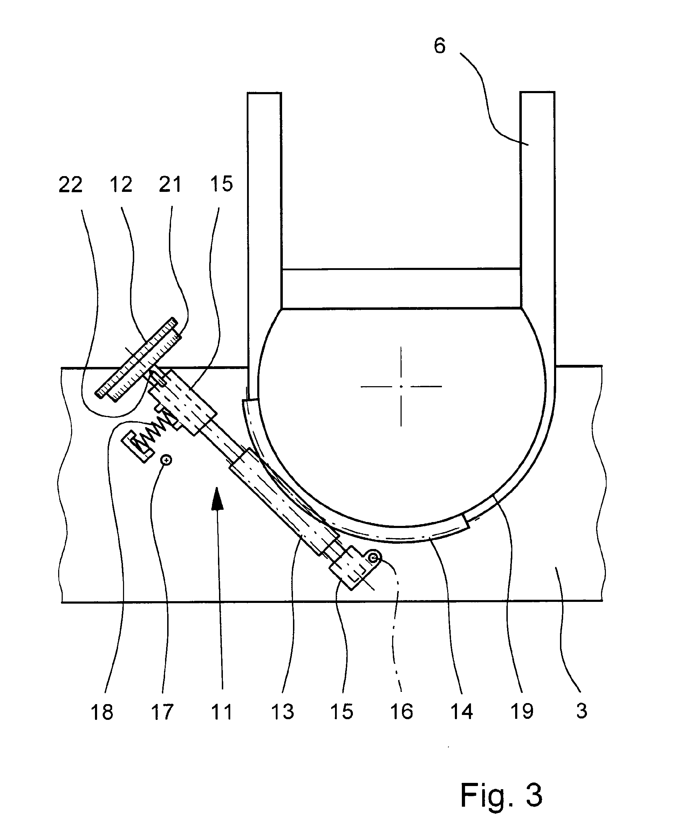

In Fig. 3 ist eine Variante gezeigt, die die erfindungsgemäße Winkelfixierungseinrichtung im Zusammenhang mit einer Neigungsverstellung der Sägeeinrichtung 6 am Drehteller 2 zeigt. Im Grundsatz ist diese Darstellung ähnlich Fig. 38 der DE 10 2005 031 064 A1, jedoch mit dem Unterschied, daß durch die Anstellfeder 18 das Antriebs-Getriebeteil 13 stets im Eingriff mit dem Abtriebs-Getriebeteil 14 steht. Das Abtriebs-Getriebeteil 14 befindet sich hier am Rand 19 der Sägeinrichtung 6.

Für die zuvor erläuterten Ausführungsformen gelten im übrigen dieselben Umkehrungs-Alternativen, die zuvor bereits mehrfach erläutert worden sind mit umgekehrter Zuordnung der jeweiligen Getriebeteile 13, 14 zu den Bezugsteilen 2, 10 der Gehrungssäge.

## Patentansprüche

1. Gehrungssäge mit
einer eine Werkstückauflagefläche (1) bildenden Basis (2),
einem mit der Basis (2) schwenkbar verbundenen Sägeaggregat (10) und
einer Winkelfixierungseinrichtung, die zwischen der Basis (2) und dem Sägeaggregat (10) vorgesehen ist und mit der der Schwenkwinkel des Sägeaggregates (10) gegenüber der Basis (2) (der Gehrungswinkel) einstellbar und fixierbar ist,
**dadurch gekennzeichnet,**
**daß** die Winkelfixierungseinrichtung als ein zwischen der Basis (2) und dem Sägeaggregat (10) wirksames selbsthemmendes Getriebe (11) ausgeführt ist, das ein mittels eines Betätigungselementes (12) betätigbares Antriebs-Getriebeteil (13) und ein vom Antriebs-Getriebeteil (13) angetriebenes Abtriebs-Getriebeteil (14) aufweist, die im Normalzustand, also ohne besondere Handhabungsmaßnahmen, in Eingriff miteinander stehen, so daß die Fixierung des Schwenkwinkels nur durch die Selbsthemmung dieses Getriebes (11) erfolgt.

2. Gehrungssäge nach Anspruch 1, **dadurch gekennzeichnet,**
**daß** das Antriebs-Getriebeteil (13) der Basis (2) und das Abtriebs-Getriebeteil (14) dem Sägeaggregat (10) zugeordnet ist.

3. Gehrungssäge nach Anspruch 1, **dadurch gekennzeichnet,**
**daß** das Antriebs-Getriebeteil (13) dem Sägeaggregat (10) und das Antriebs-Getriebeteil (14) der Basis (2) zugeordnet ist.

4. Gehrungssäge nach einem der Ansprüche 1 bis 3, **dadurch gekennzeichnet,**
**daß** das Antriebs-Getriebeteil (13) durch eine manuelle Handhabung außer Eingriff mit dem Abtriebs-Getriebeteil (14) bringbar ist (oder umgekehrt), wobei in dem dann erreichten Zustand das Sägeaggregat (10) gegenüber der Basis (2) frei verstellbar ist,
wobei, vorzugsweise, das Antriebs-Getriebeteil (13) gemeinsam mit dem Betätigungselement (12) an einem Lagerelement (15) angeordnet ist, das gegenüber der Basis (2) oder gegenüber dem Sägeaggregat (10) verschiebbar oder, vorzugsweise, schwenkbar gelagert ist.

5. Gehrungssäge nach Anspruch 4, **dadurch gekennzeichnet,**
**daß** das Antriebs-Getriebeteil (13) gegen das Abtriebs-Getriebeteil (14) durch die Kraft einer Anstellfeder (18) vorgespannt ist und so allein unter Federkraft wieder in Eingriff mit dem Abtriebs-Getriebeteil (14) gelangen kann.

6. Gehrungssäge nach einem der Ansprüche 1 bis 5, **dadurch gekennzeichnet,**
**daß** das Abtriebs-Getriebeteil (14) als kreisbogenförmiger Schneckenrad-Zahnkranz und das Antriebs-Getriebeteil (13) als Antriebsschnecke ausgeführt ist, deren Gangsteigungen auf Selbsthemmung ausgelegt sind.

7. Gehrungssäge nach einem der Ansprüche 1 bis 6, **dadurch gekennzeichnet,**
**daß** das Antriebs-Getriebeteil (13) in seiner Eingriffsstellung mechanisch verriegelbar ist, vorzugsweise durch ein Riegelelement (20).

8. Gehrungssäge nach einem der Ansprüche 1 bis 7, **dadurch gekennzeichnet,**
**daß** die Basis (2) eine Grundplatte ist,
**daß** das Sägeaggregat (10) einen an der Grundplatte drehbar gelagerten Drehteller (3) und eine am Drehteller (3) gelagerte Kapp-Sägeeinrichtung (6) oder Tisch-Zug-Sägeeinrichtung aufweist,
**daß** die Schwenkbewegung um die Hochachse des Drehtellers (3) erfolgt,
wobei, vorzugsweise, das Abtriebs-Getriebeteil (14) am Rand des Drehtellers (3) angeordnet ist und, ebenso vorzugsweise, das Antriebs-Getriebeteil (13) mit dem Betätigungselement (12) so an der Grundplatte angeordnet ist, daß das Betätigungselement (12) von vorne, insbesondere für eine rechtshändige Bedienungsperson, gut zugänglich ist.

9. Gehrungssäge nach einem der Ansprüche 1 bis 8, **dadurch gekennzeichnet,**
**daß** die Basis (2) eine feststehende Grundplatte oder ein an einer Grundplatte drehbar gelagerter Drehteller (3) ist,
**daß** das Sägeaggregat (10) eine an der Grundplatte oder am Drehteller (3) schwenkbar gelagerte Sägeeinrichtung (6) ist,
**daß** die Schwenkung um eine parallel zu der oder in der Ebene der Grundplatte bzw. des Drehtellers (3) verlaufende Schwenkachse erfolgt,
wobei, vorzugsweise, das Abtriebs-Getriebeteil (14) am Rand einer kreisbogenförmigen Platte angeordnet ist, die sich an der Grundplatte oder am Drehteller (3) befindet und,
ebenso vorzugsweise, das Antriebs-Getriebeteil (13) mit dem Betätigungselement (12) so an der schwenkbar gelagerten Sägeeinrichtung (6) angeordnet ist, daß das Betätigungselement (12), insbesondere für eine rechtshändige Bedienungsperson, gut zugänglich ist.

10. Gehrungssäge nach einem der Ansprüche 1 bis 8, **dadurch gekennzeichnet,**
**daß** die Basis (2) eine feststehende Grundplatte oder ein an einer Grundplatte drehbar gelagerter Drehteller (3) ist,
**daß** das Sägeaggregat (10) eine an der Grundplatte oder am Drehteller (3) schwenkbar gelagerte Sägeeinrichtung (6) ist,
**daß** die Schwenkung um eine parallel zu der oder in der Ebene der Grundplatte bzw. des Drehtellers (3) verlaufende Schwenkachse erfolgt,
wobei, vorzugsweise, das Abtriebs-Getriebeteil (14) an einem kreisbogenförmigen Rand (19) der Sägeeinrichtung (6) angeordnet ist und, ebenso vorzugsweise, das Antriebs-Getriebeteil (13) mit dem Betätigungselement (12) so an der Basis (2) angeordnet ist, daß das Betätigungselement (12), insbesondere für eine rechtshändige Bedienungsperson, gut zugänglich ist.
